# EUROPÄISCHE PATENTANMELDUNG

(11) **EP 1 231 078 A2**
(43) Veröffentlichungstag der Anmeldung: **14.08.2002**
(21) Anmeldenummer: 01130164.5
(22) Anmeldetag: 19.12.2001
(51) Int. Cl.: B60B 27/00

(54) **Radlagereinheit**

(30) Priorität: 13.02.2001 DE 20102451 U
(71) Anmelder: Dr.Ing. h.c.F. Porsche Aktiengesellschaft, 70435 Stuttgart (DE)
(72) Erfinder: Schote, Norbert, 72119 Ammerbuch (DE)

(57) **Zusammenfassung**

Radlagereinheit für ein Kraftfahrzeug mit einem in einem Schwenklager (2) angeordnetem Radlager (3) und einer aufgenommenen Gelenkwelle, die mit einer Gelenkglocke (4) einem Aufnahmeelement des Schwenklagers gegenübersteht, wobei die unmittelbar gegenüberstehenden Bereiche des Aufnahmeelements des Schwenklagers und der Gelenkglocke eine Dickenverminderung durch Werkstoffabtragungen (6,7) aufweisen und ein sich bildender Ringspalt zwischen dem Aufnahmeelement und der Gelenkglocke von einem auf die Gelenkwelle aufpreßbaren Abdichtring (8) überbrückbar ist.

## Beschreibung

Die Erfindung bezieht sich auf eine Radlagereinheit nach dem Oberbegriff des Anspruchs 1.

Bei einer Radlagereinheit nach der DE 44 25 732 A1 ist zwischen einem Radlager und einer Gelenkglocke zur Abdichtung eines Ringspalts ein Dichtelement vorgesehen. Dieses stützt sich einerseits am Lager und andererseits an der Gelenkglocke ab.

Aufgabe der Erfindung ist es, eine Radlagereinheit, wie ein Radträger/Schwenklager und Gelenkwelle mit Gelenkglocke für ein Kraftfahrzeug zu schaffen, und diese Radlagereinheit gewichtsmäßig leicht ist und eine optimale Abdichtung zwischen der Gelenkglocke und der Radlagereinheit oder einer Antriebswelle gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß ein herkömmlicher schmaler Ringspalt zwischen einer Gelenkglocke und einem Aufnahmeelement eines Schwenklagers zur Gewichtseinsparung vergrößert wird. Dies erfolgt indem die unmittelbar gegenüberliegenden Bereiche des Aufnahmeelements und der Gelenkglocke eine Dickenverminderung aufweisen und ein sich bildender Ringspalt von einem auf die Gelenkwelle aufpreßbaren Abdichtring oder einem zusätzlichen Bauteil überbrückbar ist.

Hierdurch wird in vorteilhafter Weise nach der Erfindung zum einen die Gewichtseinsparung an der Gelenkglocke sowie an dem Radträger/Schwenklager erzielt und zum anderen wird der Ringspalt zwischen diesen beiden Bauteilen vergrößert, so daß die Gefahr einer Verschmutzung entsteht. Um diesem entgegenzuwirken, wird der relativ große Ringspalt von einem Dichtring abgedeckt, der ein geringes Gewicht aufweist, so daß insgesamt die Radlagereinheit gewichtsmäßig leichter wird.

Das Dichtelement bzw. der Abdichtring kann entweder auf der Gelenkwelle sich mitdrehen oder auf der Gelenkwelle montiert werden oder nicht mitdrehend auf dem Schwenklager/Radträger angeordndet sein.

Die Gewichtsreduzierung wird durch eine Dickenverminderung am Aufnahmeelement des Schwenklagers sowie an der Gelenkglocke durch Werkstoffabtragungen erzielt. Diese Dickenverminderung wird in vorteilhafter Weise schon bei der Herstellung der Teile berücksichtigt. Aufgrund der Ausbildung und Positionierung der Gelenkglocke zum Schwenklager ist der erzielte Ringspalt nicht verminderbar, so daß der Abdichtring erforderlich ist. Dieser ist mit seinem einen Schenkel auf der Gelenkwelle gehalten und der andere Schenkel am abgekehrten Ende des Abdichtringes liegt an der Gelenkglocke dicht an. Der zwischenliegende Bereich des Abdichtringes ist entsprechend abgewinkelt und ist mit einer vorragenden Kante am Aufnahmeelement des Schwenklagers anliegend. Dieser Abdichtring kann auch eine andere Form aufweisen.

Die Werkstoffabtragung an der Gelenkglocke erstreckt sich vorzugsweise über einen Kreisabschnitt von einem Ansatz bzw. einem Gelenkauge bis annähernd zur Teilungsebene des Lagers. Hierdurch kann über einen relativ großen Bereich eine Werkstoffabtragung erfolgen, ohne daß die Festigkeit der Gelenkglocke beeinträchtigt wird. Entsprechend ist auch die Werkstoffabtragung am Aufnahmeelement des Schwenklagers vorgesehen, die endseitig des Aufnahmeelements aus einer Vergrößerung des Innendurchmessers besteht. Diese Werkstoffabtragung gewährleistet noch einen stabilen Festsitz des Lagers.

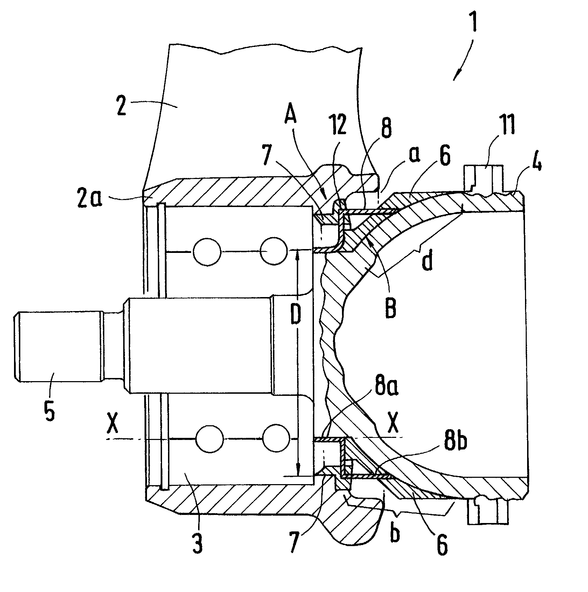

Ein Ausführungsbeispiel der Erfindung ist in der Zeichnung dargestellt und wird im folgenden näher beschrieben. Die Zeichnung zeigt eine Radlagereinheit bestehend aus einem Schwenklager, einer Gelenkglocke mit Lagerung im Schnitt.

Eine Radlagereinheit 1 für ein Kraftfahrzeug besteht im wesentlichen aus einem Schwenklager 2 mit einem Radlager 3 und einer mit einer Gelenkglocke 4 verbundenen Achse 5.

Die Gelenkglocke 4 ist zum Schwenklager 2 aufgrund der Gegebenheiten in einem vorbestimmten Abstand angeordnet, so daß sich nur ein kleiner Spalt a ausbildet, damit eine Verschmutzung des Lagers 3 vermieden werden kann.

Damit eine wesentliche Gewichtseinsparung an der Radlagereinheit 1 erzielbar ist, wird erfindungsgemäß in gegenüberstehenden Bereichen A und B, beispielsweise in einem möglichen äußeren Bereich d der Gelenkglocke 4 und einem möglichen inneren Bereich (Innendurchmesser D) am Aufnahmeelement 2a des Schwenklagers 2 eine Dickenverminderung durch eine sogenannte Werkstoffabtragungen 6 und 7 vorgenommen. Durch diese Werkstoffabtragungen 6 und 7 wird der ursprünglich kleine Spalt a zwischen den Bauteilen 2, 2a und 4 vergrößert zu einem Spalt b, der durch einen gewichtsmäßig leichten Abdichtring 8 geschlossen wird.

Die Werkstoffabtragung 6 an der Gelenkglocke 4 erstreckt sich außenseitig über einen kleinen Kreisabschnitt d vom Ansatz bzw. Auge 11 bis etwa zur Teilungsebene X-X des Lagers 3. Die Werkstoffabtragung 7 am Schwenklager 2 ist endseitig der Lageraufnahme 2a für das Lager 3 vorgesehen und besteht im wesentlichen aus einer Vergrößerung des Innendurchmessers D.

Der Abdichtring 8 kann aus einem Kunststoffring oder einem Blechring bestehen, der den Spalt b dicht überbrückt. Eine mögliche Ausführung ist in der Zeichnung dargestellt. Der Abdichtring ist mit einem Schenkel 8a mit der Gelenkwelle 4 beispielsweise aufgepreßt gehalten. Das abgekehrte Ende 8b liegt direkt an der Gelenkglocke 4 an. Der zwischenliegende Bereich ist abgewinkelt und liegt mit einer vorragenden Kante 12 am Aufnahmeelement 2a des Schwenklagers 2 an. Der Abdichtring kann auch auf das/den Schwenklager/Radträger aufgepreßt werden.

## Patentansprüche

1. Radlagereinheit für ein Kraftfahrzeug mit einem in einem Schwenklager angeordneten Radlager und einer aufgenommenen Gelenkwelle, die mit einer Gelenkglocke einem Aufnahmeelement des Schwenklagers gegenübersteht, **dadurch gekennzeichnet, daß** die unmittelbar gegenüberstehenden Bereiche (A und B) des Aufnahmeelements (2a) und der Gelenkglocke (4) eine Dickenverminderung (7, 6) aufweisen und ein sich bildender Ringspalt (b) zwischen dem Aufnahmeelement (2a) und der Gelenkglocke (4) von einem auf die Gelenkwelle (5) aufpreßbaren Abdichtring (8) überbrückbar ist.

2. Radlagereinheit nach Anspruch 1, **dadurch gekennzeichnet, daß** die Dickenverminderung an dem Aufnahmeelement (2a) des Schwenklagers (2) und an der Gelenkglocke (4) aus einer Werkstoffabtragung (7, 6) besteht.

3. Radlagereinheit nach den Ansprüchen 1 oder 2, **dadurch gekennzeichnet, daß** die Werkstoffabtragung (6) an der Gelenkglocke (4) sich über einen äußeren Kreisabschnitt (d) von einem Ansatz (11) bis annähernd zu einer Teilungsebene (X-X) des Lagers (3) erstreckt.

4. Radlagereinheit nach den Ansprüchen 1, 2 oder 3, **dadurch gekennzeichnet, daß** die Werkstoffabtragung (7) am Aufnahmeelement (2a) des Schwenklagers (2) endseitig aus einer Vergrößerung eines Innendurchmessers (D) des Aufnahmeelements (2a) besteht.

5. Radlagereinheit nach einem oder mehreren der vorhergehenden Ansprüche, **dadurch gekennzeichnet, daß** der Abdichtring (8) mit einem Schenkel (8a) auf der Gelenkwelle (5) gehalten ist und mit seinem anderen abgekehrten Ende (8b) an der Gelenkglocke (4) dicht anliegt, wobei ein zwischenliegender Bereich abgewinkelt ist und mit einer Kante (12) dem Aufnahmeelement (2a) des Schwenklagers (2) dicht gegenüberliegt.
